# EUROPEAN PATENT SPECIFICATION

(11) **EP 2 851 908 B1**
(45) Date of publication and mention of the grant of the patent: **05.08.2020**
(21) Application number: 14185357.2
(22) Date of filing: 18.09.2014
(51) Int. Cl.: H01B 5/00, C09D 5/24, C01G 19/02, H01B 5/14

(54) **Fluorinated phosphorus-doped electroconductive tin oxide powder, method of producing the powder and film using the powder**
Fluoriertes, phosphordotiertes, elektroleitfähiges Zinnoxidpulver, Verfahren zur Herstellung des Pulvers und Schicht entaltend das Pulver
Poudre d'oxyde d'étain électroconductrice dopée avec du phosphore, procédé de production de cette poudre et film utilisant cette poudre

(30) Priority: 19.09.2013 JP 2013194058
(43) Date of publication of application: 25.03.2015
(73) Proprietor: Titan Kogyo Kabushiki Kaisha, Ube-shi Yamaguchi 755-8567 (JP)
(72) Inventor: NAGAOKA, Shigeru, UBE-SHI, YAMAGUCHI, 755-8567 (JP); MAZAKI, Misao, UBE-SHI, YAMAGUCHI, 755-8567 (JP); YOSHIOKA, Eisuke, UBE-SHI, YAMAGUCHI, 755-8567 (JP)
(74) Representative: Cabinet Beau de Loménie

(56) References cited:
- EP-A1- 0 944 097
- DE-A1- 4 435 301
- JP-A- 2012 041 245

## Description

The present invention relates to a method of producing an electroconductive tin oxide powder that is free of harmful components such as antimony, has high safety and high electroconductivity, undergoes less temporal change in air and gives transparent resin films comprising the powder the superiority in transparency and surface resistance.

Electroconductive tin oxide powders are widely used for charge-controlling materials used in printer- or copier-related charge rollers, photoconductor drums, toners, carriers, electrostatic brushes, etc., and internal electrodes, transparent electroconductive films and the like for dust adhesion-preventing display filters, electromagnetic wave shielding films, near-infrared reflective films, dye-sensitized solar cells, liquid displays, plasma displays, etc.

In the market of conventional electroconductive tin oxide powders, antimony-doped tin oxide (ATO) which contains antimony, which has superior electroconductivity, has been used, but the toxicity of antimony has come to be seen as a problem in Europe. Under this circumstance, phosphorus-doped tin oxide (PTO), niobium-doped tin oxide (NbTO), fluorine-doped tin oxide (FTO) and the like have been developed as alternatives to ATO. Further, powders of electroconductive metal oxides other than tin oxides, such as tin-doped indium oxide (ITO) and aluminum-doped zinc oxide (AZO), have been developed. However, there are concerns about the extraordinary increase of price of indium and the depletion of indium, which is the main starting material of ITO. On the other hand, NbTO, FTO, AZO and the like have problems such as their insufficient electroconductivity and limited uses. In these situations, there are demands for electroconductive materials that are inexpensive, superior in electroconductivity and harmless and have a low impact on the environment. To meet the demands, the present inventors focused on PTO powder as a tin oxide powder that is antimony-free, highly electroconductive and highly safe.

Conventional electroconductive PTO powder has the following problems: for example, (1) since the PTO powder has higher volume resistance than ATO, transparent resin films containing the powder are inferior in transparency and surface resistance; (2) when the PTO powder is stored for a long period of time, its volume resistance increases because of oxidation; and (3) the catalytic activity of phosphorus deteriorates transparent electroconductive films. To solve these problems, the following methods have been examined: for example, a method of decreasing volume resistance by adsorbing phosphorus on the surface of tin oxide to suppress particle growth and firing the tin oxide under a nitrogen atmosphere (Patent Document 1: JP 2006-172916 A); a method of improving temporal stability of electroconductivity by coating an organic compound on the surface of tin oxide particles (Patent Document 2: JP 2006-202704 A); a method of suppressing phosphorus-induced deterioration of coatings or films by treating the surface of PTO powder with an acrylic acid ester to suppress the catalytic action of phosphorus (Patent Document 3: JP 2009-018979 A); and a method of decreasing volume resistance by specific atmospheric control in firing of PTO powder (Patent Document 4: JP 2012-041245 A). Electroconductive PTO powder obtained by these methods had volume resistance equivalent to that of ATO, but the phenomenon of increase of volume resistance due to air oxidation was observed during storage. Especially, transparent resin films containing the electroconductive PTO powder were not superior in transparency and surface resistance to films containing ATO.

Electroconductive FTO powder is also known as an electroconductive powder that is antimony-free and highly safe. Known production methods for such FTO powder are, for example, a method of making tin oxide electroconductive by contacting the tin oxide with 10 to 40 vol. % of fluorine gas under an inert gas atmosphere to dope the tin oxide with fluorine (Patent Document 5: JP H02-197014 A) and a method of adding fluorine or a fluorine compound to an aqueous solution of tin hydroxide, dehydrating the mixture and then heat-treating it at 350 to 800°C under an inert atmosphere with a humidity of 50% or higher (Patent Document 6: JP 2008-184373 A). Transparent resin films containing electroconductive FTO powder obtained by these methods had higher transparency than films containing ATO, but were inferior in surface resistance.

EP 0944097 A1 discloses a light-colored, electroconductive pigment has a substrate with a conductive coating of tin oxide doped with phosphorus (P) and/or fluorine (F).

Phosphorus-doped electroconductive tin oxide powder, which is one of antimony-free electroconductive powders, is equivalent in volume resistance to antimony-doped electroconductive tin oxide powder. However, transparent resin films containing phosphorus-doped electroconductive tin oxide powder are not superior in transparency and surface resistance since the volume resistance of the powder increases because of air oxidation during storage. The present invention aims to obtain a method of preparing a phosphorus-doped electroconductive tin oxide powder which is free of harmful components such as antimony, has less increase in volume resistance and undergoes less temporal change and which can be incorporated into a transparent resin film to form a transparent electroconductive film that is superior in transparency and surface resistance.

As a result of studies on phosphorus-doped electroconductive tin oxide powder, the present inventors found that an electroconductive tin oxide powder that has low volume resistance, undergoes less temporal change in volume resistance in air and gives transparent resin films comprising the powder the superiority in transparency and surface resistance is obtained by the steps of producing a phosphorus- and fluorine-containing tin hydroxide uniformly in an aqueous solution, adsorbing a water-soluble polymer on the product and then firing the product under a reducing atmosphere. This finding led to the completion of the present invention.

The fluorinated phosphorus-doped tin oxide powder prepared by the method of the present invention comprises 0.5 to 5 parts by weight of phosphorus and 0.5 to 4.0 parts by weight of fluorine, based on 100 parts by weight of tin oxide, and has a specific surface area of 40 to 100 m²/g and a volume resistance of 100 Ω•cm or less.

After being heated at 150°C for 1 hour in an air atmosphere, the fluorinated phosphorus-doped tin oxide powder has a volume resistance that remains unchanged in order of magnitude from the initial state, showing the powder's superiority in oxidation resistance.

The fluorinated phosphorus-doped tin oxide powder can be produced by the method of producing a phosphorus- and fluorine-containing tin hydroxide in an aqueous solution, adsorbing a water-soluble polymer on the product and then firing the product at 400 to 700°C under a reducing atmosphere.

The fluorinated phosphorus-doped tin oxide powder can be dispersed to form a coating material. This coating material comprises 60 to 80% by weight of tin oxide based on 100% by weight of the whole coating material. When the coating material is used to form a 2 µm-thick transparent thin film, this film has a total light transmittance of 85% or more, a haze of 3% or less and a surface resistance of 1×10⁷ Ω/□ or less.
The subject-matter of the present invention is defined by the claims.

A possible mechanism by which tin oxide-based electroconductive powder such as phosphorus-doped tin oxide powder exhibits electroconductivity is that the addition of a dopant to tin oxide causes oxygen deficiency in tin oxide particles SnO₍₂₋ₓ₎, resulting in the onset of electroconductivity. However, undue increase of this oxygen deficiency does not enhance electroconductivity and, instead, can decrease electroconductivity. In the present invention, replacement of oxygen atoms by fluorine to optimize the amount of oxygen deficiency and firing under specific atmospheric control produce a tin oxide-based electroconductive powder which has electroconductivity equivalent to or higher than that of phosphorus-doped tin oxide powders and which undergoes less temporal change in air. It is presumed that fluorine suppresses particle growth in the firing step and contributes to the enhancement of transparency of coating materials comprising the tin oxide-based electroconductive powder.

The fluorinated phosphorus-doped tin oxide powder of prepared by the method of the present invention is an electroconductive powder that has stable electroconductivity and high transparency. Since this powder does not use antimony, which has problems in toxicity, the powder can be used in various fields and produced relatively easily and, thus, it has high industrial advantages. Further, addition of fluorine to phosphorus-doped tin oxide can suppress excessive particle growth during reaction, retain a particulate state favorable to electroconductive path, and provide good properties in coating films.

Hereinafter, the method of preparing a fluorinated phosphorus-doped tin oxide powder of the present invention will be described in detail.

### (Production method)

The method of preparing an electroconductive powder of the present invention can comprise the steps of producing a tin hydroxide comprising 0.5 to 5 parts by weight of phosphorus and 0.5 to 4.0 parts by weight of fluorine, based on 100 parts by weight of tin oxide, washing the product with a water-soluble polymer adsorbed on the product, and firing the product under atmospheric control. The firing treatment typically consists of the steps of replacing ambient air by inert gas, heating the product to a firing temperature, firing it at the firing temperature, and cooling it from the firing temperature to room temperature. In the firing treatment, inert gas is flowed in the step of replacing ambient air before heating and the step of cooling after the firing, whereas the inflow of inert gas is stopped for atmospheric control in the steps of heating and firing that cause oxygen defect. By firing at a firing temperature of 400 to 700°C, a fluorinated phosphorus-doped tin oxide powder having a specific surface area of 40 to 100 m²/g and a volume resistance of 100 Ω•cm or less is obtained.

### (Hydrolysis reaction)

The phosphorus- and fluorine-containing tin hydroxide is obtained by a known hydrolysis process. More specifically, the tin hydroxide is obtained by the steps of dissolving a phosphorus compound and a fluorine compound in a solution of a tin salt or a stannate and, at the same time, adding an alkali or an acid. This reaction is preferably performed at a temperature of 50 to 90°C and a pH of 2 to 5. At a reaction temperature lower than 50°C, heat of neutralization makes temperature control difficult. Meanwhile, at a reaction temperature higher than 90°C, energy loss is large. At a pH lower than 2, particles produced tend to aggregate. Meanwhile, at a pH higher than 5, particles excessively grow and decrease transparency. During the reaction, a lower solid content concentration is preferred to obtain high transparency in transparent resin films.

Examples of the tin salt include tin chloride, tin sulfate, and tin nitrate. Examples of the stannate include sodium stannate and potassium stannate.

Examples of the alkali include sodium hydroxide, potassium hydroxide, sodium carbonate, potassium carbonate, ammonium carbonate, aqueous ammonia, and ammonia gas. Examples of the acid include hydrochloric acid, sulfuric acid, nitric acid, and acetic acid.

Examples of the phosphorus compound include halides such as phosphorus trichloride and phosphorus pentachloride, phosphoric acids such as orthophosphoric acid, sodium hydrogen phosphate, trisodium phosphate, ammonium hydrogen phosphate, phosphorous acid, sodium dihydrogen phosphite, trisodium phosphite, pyrophosphoric acid, hexametaphosphoric acid, triphosphoric acid and polyphosphoric acid, and salts of the halides or the phosphoric acids.

It is preferred that phosphorus is added by the method of dissolving phosphorus preliminarily in a solution of a tin salt or a stannate to form a phosphorus product during the hydrolysis reaction of tin. The method of adding a phosphorus compound after production of tin hydroxide tends to promote particle growth in the step of firing treatment and to decrease transparency.

The amount of phosphorus in the phosphorus compound added is 0.1 to 5 parts by weight, preferably 0.5 to 4 parts by weight, based on 100 parts by weight of SnO₂. When the amount of phosphorus is smaller than 0.1 part by weight, the sintering-preventing effect of phosphorus is small and transparency is low because of particle growth in the firing step. When the amount of phosphorus exceeds 5 parts by weight, a thick P₂O₅ layer is formed on grain boundary or particle surface and the volatilization of oxygen is suppressed, resulting in insufficient electroconductivity.

### (Addition of fluorine)

Fluorine may be added by the method of producing phosphorus-containing hydrous tin oxide and then adding a fluorine compound, but it is preferred that fluorine is preliminarily dissolved in a tin source solution and a neutralization source so that fluorine is incorporated together with phosphorus into the structure of tin hydroxide during the hydrolysis reaction of tin.

Examples of the fluorine compound include tin fluoride, ammonium fluoride, hydrogen fluoride, and boron fluoride.

The amount of fluorine in the fluorine compound added is preferably 0.5 to 4.0 parts by weight based on 100 parts by weight of SnO₂. When the amount of fluorine is smaller than 0.5 part by weight, volume resistance does not decrease. Even when the amount of fluorine is larger than 4.0 parts by weight, there is no great difference in volume resistance from that obtained in the amount of 4.0 parts by weight.

### (Washing of tin hydroxide/addition of water-soluble polymer compound)

The production method of the electroconductive powder of the present invention may include the step of washing the phosphorus- and fluorine-containing tin hydroxide obtained in the hydrolysis reaction. The washing is preferably carried out by a method in which a suspension for treatment is diluted with pure water, a water-soluble polymer compound is added for aggregation, then decantation for washing is carried out to decrease the electrolyte concentration of the suspension and adsorb the water-soluble polymer compound on aggregates of tin hydroxide. In the firing step performed after filtration and drying of the washed material, an optimum amount of oxygen defect is caused in phosphorus- and fluorine-containing tin oxide particles SnO₍₂₋ₓ₎ by reductive gas produced by degradation of the adsorbed polymer compound, and good electroconductivity can be exhibited. Such a water-soluble polymer compound can be produced by a conventionally known method or obtained from the market.

Examples of the water-soluble polymer compound include water-soluble cationized polymers and water-soluble anionized polymers.

Examples of the water-soluble cationized polymers include cationized starches such as Himax NC-10 and PC-6500 (Hymo Co., Ltd.); cationized guar gums such as MEYPRO-BOND 9806 (Sansho Co., Ltd.); cationized acrylamides such as Polymaron 351 and 360, Polystron 311 and 619, and Arafix 251 (Arakawa Chemical Industries, Ltd.); cationized polyacrylic acid esters such as Himoloc MP-184, MP-284, MP-384, MP-484, MP-584, MP-684, MP-784, MP-984, MP-173H, MP-373H, MP-373L, MP-473H, MP-405, MP-180, MP-380, MP-558, MS-882, MS-884, MX-0120, MX-0210, MX-8170, MX-8130, MX-6170, MX-6144, MX-4173, MX-2100, MX-4054, MX-3310, MX-2050, E-305, E-315, E-195, E-395, E-775, E-755, E-555, E-950, E-513, E-515, and E-510 (Hymo Co., Ltd.); cationizied vinylformamides such as Himoloc ZP-700 (Hymo Co., Ltd.); cationizied polyacrylamides such as Himoloc Neo-600 (Hymo Co., Ltd.); and cationizied polyamines such as Himoloc Q-101, Q-311, and Q-501 (Hymo Co., Ltd.) (The names shown above are product names).

Examples of the water-soluble anionized polymers include anionized polyacrylamides such as Himoloc SS-200H, SS-200, SS-300, SS-500, SS-100, SS-120, SS-130, SS-140, AP-105, AP-107, AP-115, AP-120, V-330, V-320, V-310, OK-107, OK-307, OK-507, L-113, and Neo-200 (Hymo Co., Ltd.); and anionized polyacrylic acid sodas such as Himoloc SS-190 (Hymo Co., Ltd.) (The names shown above are product names).

The amount of each of these polymer compounds added is preferably 0.02 to 0.5 part by weight in terms of carbon amount, based on 100 parts by weight of SnO₂ in products of hydrolysis reaction of tin. When the amount of the polymer compound is smaller than 0.02 part by weight, reduction effect is small and electroconductivity is not enhanced. When the amount of the polymer compound is larger than 0.5 part by weight, electroconductivity is low since an optimum amount of oxygen defect is not obtained.

### (Firing treatment)

As noted above, the firing treatment typically consists of the steps of replacing ambient air by inert gas, heating a product to a firing temperature, firing it at the firing temperature, and cooling it from the firing temperature to room temperature. Since the electroconductivity of tin oxide particles results from oxygen deficiency in particles, the firing needs to be carried out in a non-oxidizing atmosphere.

For this reason, first in the firing treatment, sufficient inert gas is injected before heating to replace ambient air by the inert gas. Next, in the heating and the firing, the inert gas injection is stopped and the firing is carried out by the method of prolonging the residence time of reductive gas which is produced from organic material added and which contributes to the onset of electroconductivity, while keeping the reductive gas. In the cooling step after the completion of the firing step, inert gas is flowed again to prevent air from entering. It is presumed that the control of the amount of inert gas by the method described above can optimize the amount of oxygen defect in SnO₍₂₋ₓ₎ of fluorinated phosphorus-doped tin oxide particles and provide good electroconductivity.

The temperature of the firing is 400 to 700°C. When the temperature is lower than 400°C, electroconductivity is not enhanced. Meanwhile, when the temperature is higher than 700°C, sintering and particle growth occur and transparency can be possibly low in transparent resin films.

For the firing in a non-oxidizing atmosphere, inert gas may be used. Examples of the inert gas include nitrogen, helium, argon, and carbon dioxide gas. Tin oxide particles having stable electroconductivity are obtained by adjustment of the amount of inert gas such as nitrogen gas to control atmosphere for the firing treatment.

### (Organic surface treatment)

The fluorinated phosphorus-doped tin oxide powder obtained after the firing may be treated with an organic material or the like, such as a silane coupling agent or a polyhydric alcohol. The surface treatment of the electroconductive powder with an organic material promotes the dispersion of the powder in resins. Further, since the surface treatment with an organic material blocks oxygen in air which causes decrease in volume resistance, such a treatment contributes to temporal stability of volume resistance. A known method for surface treatment with an organic material may be applied.

### (Films)

The fluorinated phosphorus-doped tin oxide powder prepared by the method of the present invention can be incorporated into coating materials, inks, emulsions, and fibers to produce electroconductive coating materials, electroconductive inks, electroconductive emulsions, and electroconductive fibers, respectively. Further, a sand grinder or the like can be used to prepare a resin coating material comprising the electroconductive tin oxide powder, and this coating material can be applied on a base material to be provided with electroconductivity or antistatic property to form a coating film. A preferred component of this coating film is a thermosetting resin or an ultraviolet curable resin. The concentration of the electroconductive tin oxide to be incorporated needs to be adjusted as appropriate according to desired electroconductive property and is preferably 60 to 80% by weight in the resin coating material based on 100% by weight of the whole resin coating material. An excessively small amount of the electroconductive tin oxide powder is not preferred because desired surface resistance is not obtained. An excessively large amount of the powder is also not preferred because it results in production of a low-strength coating film and also results in cost increase.

The fluorinated phosphorus-doped tin oxide powder prepared by the method of the present invention may be used to produce a transparent film comprising 60 to 80 parts by weight of the powder relative to whole film components and having a film thickness of 2 µm. This film has a total light transmittance of 85% or more, a haze of 3% or less and a surface resistance of 1×10⁷ Ω/□ or less.

The present invention will be described in more detail below with reference to examples. The examples shown below are merely provided for illustrative purposes and shall not limit the scope of the present invention.

### [Example 1]

Adjustment of hydrolysis product of tin: 5.0 L of pure water was heated to and retained at 70°C. In addition, 983.1 g of sodium stannate prepared was dissolved in 2.5 L of pure water to prepare a solution A. Aside from this solution, a solution B was prepared by dissolving 18.6 g of orthophosphoric acid and 25.3 g of tin fluoride in 1.3 L of 6N hydrochloric acid to be used for neutralization purpose. The solutions A and B were added dropwise simultaneously over about 1.7 hours so that the pH was retained at 2 to 3. Subsequently, the mixture was stirred and retained for 30 minutes to age it. The final solid content concentration was 60 g/L.

Washing step: The suspension for treatment was diluted with pure water, and 2.5 L of an aqueous solution of Himoloc SS-120, which is a water-soluble anionized compound produced by Hymo Co., Ltd. (0.5 g/L), was added for aggregation. This amount for addition corresponds to 0.25 parts by weight based on 100 parts by weight of SnO₂ in the hydrolysis product. The aggregated settled slurry was decanted a few or several times for washing and filtration.

Drying step: The resulting washed cake was dried at 110°C.

Firing treatment: 1.2 kg of the resulting dry powder was charged into a 15 L-capacity batch-type rotary kiln manufactured by Advantec Toyo Kaisha, Ltd., and nitrogen was flowed in the volumes shown in the following atmospheric conditions a in each step to carry out a firing treatment and obtain a fired product:
Atmospheric conditions a
Step A: Purge with nitrogen before heating. Injection of nitrogen gas in a volume of 1 L/min for 30 minutes.
Step B: Heating to 600°C at a rate of 6.5°C/min. Flow volume of nitrogen gas: 0 L/min.
Step C: Retention at 600°C for 60 minutes. Flow volume of nitrogen gas: 0 L/min.
Step D: Air-cooling to room temperature at a rate of 5°C/min. Flow volume of nitrogen gas: 1 L/min.
Grinding step: Airflow grinding was carried out to give a desired sample A.

### [Example 2]

A desired sample B was obtained using the same procedures as in Example 1 except that the final solid content concentration was 20 g/L.

### [Example 3]

A desired sample C was obtained using the same procedures as in Example 1 except that the tin source was stannic chloride.

### [Example 4]

A desired sample D was obtained using the same procedures as in Example 1 except that the fluorine source was ammonium fluoride.

### [Example 5]

A desired sample E was obtained using the same procedures as in Example 1 except that the amount of fluorine was 2.5 parts by weight.

### [Example 6]

A desired sample F was obtained using the same procedures as in Example 1 except that the amounts of phosphorus and fluorine were 3.0 parts by weight and 3.6 parts by weight, respectively.

### [Comparative Example 1]

A sample G was obtained using the same procedures as in Example 1 except that no fluorine was added.

### [Comparative Example 2]

A sample H was obtained using the same procedures as in Example 1 except that nitrogen gas was injected continuously in a volume of 1 L/min in the firing treatment.

The treatment conditions and powder properties of the respective samples are shown in Table 1. Their properties obtained in the form of electroconductive coating films are shown in Table 2. The volume resistance and specific surface areas of the powders and the total light transmittance and surface resistance of the thin films were determined by the methods described below.

### (Determination method for specific surface areas)

The samples were deaerated in nitrogen at 150°C for 30 minutes and then their specific surface areas were determined by the single point BET method with Gemini 2360, a product of MicroMetrics, Inc. The results are shown in Table 1.

### (Determination method for volume resistance)

The samples, which were molded under a pressure of 230 kgf/cm² (diameter: 25.4 mm), were connected to AR-480D, an LCR meter manufactured by Keisei Corporation, to determine their resistance values. In addition, the thickness of the samples was determined and their volume resistance values were calculated. The results are shown in Table 1.

### (Heating test)

The samples were heated in an air atmosphere at 150°C for 1 hour and then their volume resistance was determined by the method described above. The results are shown in Table 1.

### (Preparation of electroconductive coating films)

Each electroconductive powder and Acrydic A-168, which is a transparent acrylic resin (resin content: 50% by weight) produced by Dai Nippon Toryo Co., Ltd., were added to a xylene-toluene mixture. The resulting mixture was dispersed in a paint shaker with beads for 120 minutes to prepare a dispersion liquid. This dispersion liquid was applied on a PET film with a doctor blade and air-dried for 1 hour to form a transparent coating film comprising 80 parts by weight of tin oxide and having a film thickness of 2 µm.

### (Determination of light transmittance)

The visible light transmittance of the thin films prepared was determined with HGM-2DP, a direct-reading haze computer spectrophotometer manufactured by Suga Test Instruments Co., Ltd. The results are shown in Table 2.

### (Determination method for surface resistance)

The surface resistance of the thin films each comprising 80 parts by weight of tin oxide and having a film thickness of 2 µm was determined with HP4339A, a surface resistance meter manufactured by Yokogawa-Hewlett-Packard, Ltd. The results are shown in Table 2.

| | Tin source | Fluorine source | Amount of fluorine (parts by weight) | Amount of phosphorus (parts by weight) | Solid content conc. (g/L) | Flow volume of nitrogen in Step C (L/min) | Specific surface area (m²/g) | Volume resistance of powder (Ω•cm) | Heating test (Ω•cm) |
|---|---|---|---|---|---|---|---|---|---|
| Ex. 1 Sample A | Na₂SnO₃ | SnF₂ | 1.2 | 1.0 | 60 | 0 | 53 | 2.5 | 5.0 |
| Ex. 2 Sample B | Na₂SnO₃ | SnF₂ | 1.2 | 1.0 | 20 | 0 | 68 | 1.6 | 7.1 |
| Ex. 3 Sample C | SnCl₄ | SnF₂ | 1.2 | 1.0 | 60 | 0 | 67 | 1.3 | 5.9 |
| Ex. 4 Sample D | Na₂SnO₃ | NH₄F | 1.2 | 1.0 | 60 | 0 | 51 | 3.9 | 6.3 |
| Ex. 5 Sample E | Na₂SnO₃ | SnF₂ | 2.5 | 1.0 | 60 | 0 | 50 | 2.3 | 5.0 |
| Ex. 6 Sample F | Na₂SnO₃ | SnF₂ | 3.6 | 3.0 | 60 | 0 | 99 | 40 | 81 |
| Comp. Ex. 1 Sample G | Na₂SnO₃ | | | 1.0 | 60 | 0 | 46 | 5.1 | 18 |
| Comp. Ex. 2 Sample H | Na₂SnO₃ | SnF₂ | 1.2 | 1.0 | 60 | 1.0 | 60 | 30 | 112 |

**[Table 2]**

| | | Surface resistance (Ω•cm) | Total light transmittance (%) | Haze (%) |
|---|---|---|---|---|
| Ex. 1 | Sample A | 4.0E+05 | 89.5 | 2.3 |
| Ex. 2 | Sample B | 1.3E+06 | 89.7 | 1.3 |
| Ex. 3 | Sample C | 7.8E+05 | 85.7 | 3.0 |
| Ex. 4 | Sample D | 8.6E+06 | 88.2 | 2.8 |
| Ex. 5 | Sample E | 4.8E+05 | 89.1 | 2.2 |
| Ex. 6 | Sample F | 1.6E+06 | 88.8 | 3.0 |
| Comp. Ex. 1 | Sample G | 1.4E+07 | 82.7 | 3.9 |
| Comp. Ex. 2 | Sample H | 2.6E+07 | 85.3 | 4.4 |

These results show that, in accordance with the working examples, the present invention provides a method of producing a phosphorus-doped electroconductive tin oxide powder which undergoes less temporal change in volume resistance in air and which gives coating films comprising the powder the superiority in total light transmittance, haze and surface resistance.

## Claims

1. A method of producing a fluorinated phosphorus-doped tin oxide powder comprising 0.5 to 5 parts by weight of phosphorus and 0.5 to 4.0 parts by weight of fluorine, based on 100 parts by weight of tin oxide, and having a specific surface area of 40 to 100 m²/g and a volume resistance of 100 Ω•cm or less, the method comprising the steps of:
producing a phosphorus- and fluorine-containing tin hydroxide by hydrolysis of a tin salt or a stannate in the presence of a phosphorus compound and a fluorine compound;
adsorbing a water-soluble polymer on the product; and then
firing the product at 400 to 700°C under a reducing atmosphere.

2. The method according to claim 1, wherein in the firing treatment step, sufficient inert gas is injected before heating to replace ambient air by inert gas; and next in the heating and the firing, the inert gas injection is stopped and the firing is carried out by the method of prolonging the residence time of reductive gas which is produced by degradation of the adsorbed water-soluble polymer, while keeping the reductive gas.

3. The method according to claim 1 or 2, wherein the amount of the water-soluble polymer added is between 0.02 and 0.5 part by weight in terms of carbon amount, based on 100 parts by weight of SnO₂ in products of hydrolysis reaction of tin.

4. A fluorinated phosphorus-doped tin oxide obtainable by the method according to any one of claims 1 to 3.

5. A coating material comprising 60 to 80% by weight of the fluorinated phosphorus-doped tin oxide of claim 4 based on 100% by weight of the whole coating material, the coating material being used to form a 2 µm-thick transparent thin film having a total light transmittance of 85% or more, a haze of 3% or less and a surface resistance of 1×10⁷ Ω/□ or less.

6. A film comprising the fluorinated phosphorus-doped tin oxide powder of claim 4.

## Patentansprüche

1. Verfahren zur Herstellung eines fluorierten phosphordotierten Zinnoxidpuders, der bezogen auf 100 Gewichtsteile Zinnoxid 0,5 bis 5 Gewichtsteile Phosphor und 0,5 bis 4,0 Gewichtsteile Fluor enthält und eine spezifische Oberfläche von 40 bis 100 m²/g und einen Durchgangswiderstand von 100 Ω • cm oder weniger aufweist, wobei das Verfahren die folgenden Schritte umfasst:
Herstellen eines phosphor- und fluorhaltigen Zinnhydroxids durch Hydrolyse eines Zinnsalzes oder eines Stannats in Gegenwart einer Phosphorverbindung und einer Fluorverbindung,
Adsorbieren eines wasserlöslichen Polymers auf dem Produkt und anschließend
Brennen des Produkts bei 400 bis 700 °C in einer reduzierenden Atmosphäre.

2. Verfahren nach Anspruch 1, wobei in dem Brennbehandlungsschritt vor dem Erwärmen ausreichend Inertgas injiziert wird, um Umgebungsluft durch Inertgas zu ersetzen, und daraufhin bei dem Erwärmen und Brennen die Inertgasinjektion eingestellt wird und das Brennen mittels des Verfahrens des Verlängerns der Verweildauer von reduzierendem Gas durchgeführt wird, das durch den Abbau des adsorbierten wasserlöslichen Polymers erzeugt wird, während das reduzierende Gas erhalten bleibt.

3. Verfahren nach Anspruch 1 oder 2, wobei die Menge des hinzugefügten wasserlöslichen Polymers hinsichtlich des Kohlenstoffgehaltes bezogen auf 100 Gewichtsteile SnO₂ in Zinnhydrolyse-Reaktionsprodukten zwischen 0,02 und 0,5 Gewichtsteile beträgt.

4. Fluoriertes phosphordotiertes Zinnoxid, das durch das Verfahren nach einem der Ansprüche 1 bis 3 erhältlich ist.

5. Beschichtungsmaterial, umfassend 60 bis 80 Gew.-% des fluorierten phosphordotierten Zinnoxids aus Anspruch 4 bezogen auf 100 Gew.-% des gesamten Beschichtungsmaterials, wobei das Beschichtungsmaterial verwendet wird, um einen transparenten Dünnfilm mit einer Dicke von 2 µm zu bilden, der eine Gesamtlichtdurchlässigkeit von 85 % oder mehr, eine Trübung von 3 % oder weniger und einen Oberflächenwiderstand von 1 x10⁷ Ω/□ oder weniger aufweist.

6. Film, umfassend den fluorierten phosphordotierten Zinnoxidpuder aus Anspruch 4.

## Revendications

1. Procédé de production d'une poudre d'oxyde d'étain dopé au phosphore fluoré comprenant de 0,5 à 5 parties en masse de phosphore et de 0,5 à 4,0 parties en masse de fluor, sur la base de 100 parties en masse d'oxyde d'étain, et présentant une surface spécifique de 40 à 100 m²/g et une résistance volumique de 100 Ω•cm ou inférieure, le procédé comprenant les étapes de :
production d'un hydroxyde d'étain contenant du fluor et du phosphore par hydrolyse d'un sel d'étain ou d'un stannate en présence d'un composé de phosphore et d'un composé de fluor ;
adsorption d'un polymère soluble dans l'eau sur le produit ; et puis
cuisson du produit à de 400 à 700°C sous une atmosphère réductrice.

2. Procédé selon la revendication 1, dans lequel dans l'étape de traitement de cuisson, suffisamment de gaz inerte est injecté avant le chauffage pour remplacer l'air ambiant par du gaz inerte ; et ensuite dans le chauffage et la cuisson, l'injection de gaz inerte est stoppée et la cuisson est réalisée par le procédé de prolongement du temps de séjour de gaz réducteur qui est produit par dégradation du polymère soluble dans l'eau adsorbé, tout en maintenant le gaz réducteur.

3. Procédé selon la revendication 1 ou 2, dans lequel la quantité du polymère soluble dans l'eau ajoutée est de 0,02 à 0,5 partie en masse en termes de quantité de carbone, sur la base de 100 parties en masse de SnO₂ dans des produits de réaction d'hydrolyse d'étain.

4. Oxyde d'étain dopé au phosphore fluoré pouvant être obtenu par le procédé selon l'une quelconque des revendications 1 à 3.

5. Matériau de revêtement comprenant de 60 à 80 % en masse de l'oxyde d'étain dopé au phosphore fluoré selon la revendication 4, sur la base de 100 % en masse du matériau de revêtement entier, le matériau de revêtement étant utilisé pour former un mince film transparent d'épaisseur 2 µm présentant un facteur de transmission de lumière totale de 85 % ou supérieure, une turbidité de 3 % ou inférieure et une résistance de surface de 1x10⁷ Ω/□ ou inférieure.

6. Film comprenant la poudre d'oxyde d'étain dopé au phosphore fluoré selon la revendication 4.
